# EUROPÄISCHE PATENTSCHRIFT

(11) **EP 2 735 354 B1**
(45) Veröffentlichungstag und Bekanntmachung des Hinweises auf die Patenterteilung: **03.06.2015**
(21) Anmeldenummer: 13005432.3
(22) Anmeldetag: 19.11.2013
(51) Int. Cl.: B01D 53/04

(54) **Aktivkohle-Luftfilter mit konischem Innenkorb**
Active carbon air filter with conical internal cage
Filtre à air à charbons actifs doté d'une corbeille intérieure conique

(30) Priorität: 21.11.2012 DE 202012011149 U
(43) Veröffentlichungstag der Anmeldung: 28.05.2014
(73) Patentinhaber: Prima Klima Trading CZ s.r.o., 33828 Radnice u Rokycany (CZ)
(72) Erfinder: Reeh, Gerhard, CZ-33828 Radnice u Rokycany (CZ)
(74) Vertreter: Lehmann, Horst Michael

(56) Entgegenhaltungen:
- CH-A5- 639 565
- DE-A1- 2 438 503
- DE-U1-202007 003 135
- SU-A1- 1 308 366

## Beschreibung

Die Erfindung betrifft eine Filterpatrone zum Reinigen von Luft sowie eine Filtervorrichtung zum Reinigen von Luft. Darüber hinaus betrifft die Erfindung ein Verfahren zur Montage einer Filterpatrone, welche zum Reinigen von Luft ausgelegt ist.

Zum Reinigen von Luft haben sich Aktivkohleluftfilter in einer Vielzahl von Ausführungsformen bewährt. In vielen Fällen wird die Filterpatrone jedoch nicht gleichmäßig mit Luft durchströmt.

In der deutschen Patentanmeldung DE 2438503 A1 ist ein Luftfilter beschrieben, bei dem die verunreinigte Luft durch ein Aktivkohlefilter strömen muss, bevor sie in einen Innenraum oder dergleichen eintreten kann. Das Luftfilter besteht aus auf einer Grundplatte angeordneten Filterkörpern, die zwischen zwei Siebplatten befindliche Aktivkohle enthalten, wobei die Siebplatten als ineinander gestellte Siebmanschetten ausgebildet sind. Die äußere Siebmanschette verläuft konisch und ist mit ihrem breiteren Ende der Grundplatte zugekehrt, wobei an diesem Ende ein trichterförmiger Saugstutzen in die innere Siebmanschette mündet. Vorzugsweise ist auch die innere Siebmanschette konisch ausgebildet.

In dem deutschen Gebrauchsmuster DE 20 2007 003 135 U 1 ist eine nachfüllbare Filterkartusche beschrieben. Die Filterkartusche umfasst ein Gehäuse mit einer Außenwand, eine strömungsstirnseitige Eintrittsöffnung und eine strömungsendseitige Austrittsöffnung, eine umlaufende äußere Wandung mit darin eingebrachten Perforationen und eine umlaufende innere Wandung mit darin eingebrachten Perforationen, wobei die äußere Wandung einen größeren Durchmesser aufweist als die innere Wandung. Die Filterkartusche umfasst außerdem eine von der umlaufenden inneren Wandung gebildete zentrale Strömungskammer, die von einer Endplatte mit darin eingebrachten Perforationen zur Strömungsendseite abgeschlossen ist, eine von der umlaufenden äußeren Wandung und der umlaufenden inneren Wandung gebildete Filterkammer, die mit Filtermaterial auffüllbar ist, sowie einen von der Außenwand und der äußeren Wandung gebildeten Strömungskanal. Im aktiven Betrieb der Filterkartusche findet eine Luftströmung von der strömungsstirnseitigen Eintrittsöffnung in die Strömungskammer durch die Filterkammer in den Strömungskanal zur strömungsendseitigen Austrittsöffnung statt.

Es ist Aufgabe der Erfindung, eine Filterpatrone zum Reinigen von Luft zur Verfügung zu stellen, welche einen gleichmäßigen Luftdurchsatz ermöglicht.

Diese Aufgabe wird durch eine Filterpatrone zum Reinigen von Luft gemäß Anspruch 1, durch eine Filtervorrichtung zum Reinigen von Luft gemäß Anspruch 9 sowie durch ein Verfahren zur Montage einer Filterpatrone gemäß Anspruch 13 gelöst.

Eine Filterpatrone entsprechend den Ausführungsformen der Erfindung dient zum Reinigen von Luft und umfasst einen Lochblech-Außenkorb, eine Bodenscheibe, die die Filterpatrone am unteren Ende abschließt, einen Ansaugstutzen, der die Filterpatrone am oberen Ende abschließt, sowie einen konisch geformten Lochblech-Innenkorb, der sich im Inneren des Lochblech-Außenkorbs von der Bodenscheibe zum Ansaugstutzen erstreckt und durch die Bodenscheibe und den Ansaugstutzen fixiert ist. Die Filterpatrone umfasst außerdem eine Aktivkohleschicht, die im Zwischenraum zwischen Lochblech-Innenkorb und Lochblech-Außenkorb angeordnet ist. Der Lochblech-Außenkorb ist von zylindrischer Form und der Durchmesser des Lochblech-Außenkorbs ist über die ganze Länge der Filterpatrone gleich. Der Lochblech-Innenkorb verjüngt sich konisch in Richtung von der Bodenscheibe zum Ansaugstutzen hin, wobei der Durchmesser des Lochblech-Innenkorbs von der Bodenscheibe zum Ansaugstutzen hin stetig abnimmt, und wobei sich die Schichtstärke der Aktivkohleschicht infolge der zylindrischen Form des Lochblech-Außenkorbs und der konischen Form des Lochblech-Innenkorbs in Richtung vom Ansaugstutzen zur Bodenscheibe hin verkleinert.

Eine Filterpatrone entsprechend den Ausführungsformen der Erfindung hat den Vorteil, dass wegen der vom Ansaugstutzen zur Bodenscheibe hin abnehmenden Schichtstärke der Aktivkohleschicht eine gleichmäßige Durchströmung der Aktivkohleschicht erreicht wird. Die Filterpatrone ermöglicht über die ganze Filterfläche hinweg einen gleichmäßigen Luftdurchsatz. Dadurch wird die Aktivkohle gleichmäßig mit Schadstoffen beladen. Darüber hinaus ermöglicht die Filterpatrone eine schnelle Montage sowie Demontage und ist wiederbefüllbar.

Nachfolgend wird die Erfindung anhand eines in der Zeichnung dargestellten Ausführungsbeispiels weiter beschrieben. Es zeigen:
Fig. 1 eine Übersichtsdarstellung einer Aktivkohlefilterpatrone;
Fig. 2 eine mit einem Sauggebläse verbundene Aktivkohlefilterpatrone im laufenden Betrieb;
Fig. 3 eine Explosionszeichnung, die den Zusammenbau der Aktivkohlefilterpatrone veranschaulicht;
Fig. 4A eine Seitenansicht der Aktivkohlefilterpatrone;
Fig. 4B eine Schnittdarstellung der Aktivkohlefilterpatrone;
Fig. 4C eine Draufsicht auf die Aktivkohlefilterpatrone; und
Fig. 5 eine Detailansicht, die veranschaulicht, wie der Innenkorb der Aktivkohlefilterpatrone durch die am Ansaugstutzen angeordnete kreisförmig umlaufende Sicke fixiert wird.

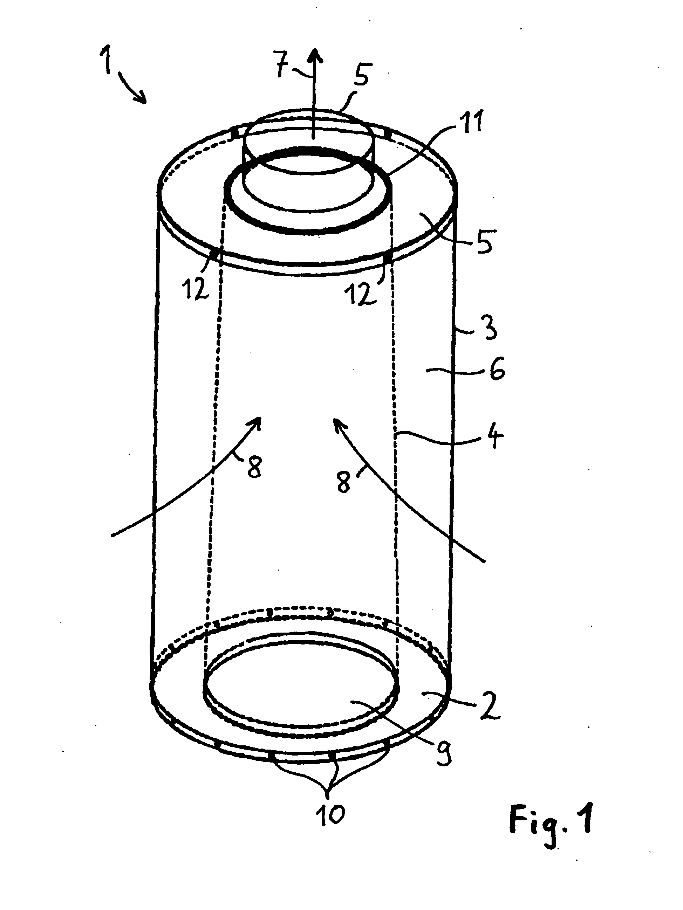

In Fig. 1 ist eine Aktivkohlefilterpatrone entsprechend den Ausführungsformen der vorliegenden Erfindung gezeigt, welche zum Reinigen von Luft eingesetzt wird: Die Aktivkohlefilterpatrone kann beispielsweise zum Reinigen von Küchendämpfen eingesetzt werden, sowie beispielsweise zum Reinigen der Luft in Lackierbetrieben, Metzgereien, Toiletten, Tierställen, in der Tierfutterindustrie, etc. Generell kann die Aktivkohlefilterpatrone überall dort eingesetzt werden, wo unerwünschte Gerüche und Luftverschmutzungen entstehen.

Die in Fig. 1 gezeigte Aktivkohlefilterpatrone 1 umfasst eine Bodenscheibe 2, einen luftdurchlässigen Außenkorb 3 von zylindrischer Form, einen luftdurchlässigen Innenkorb 4, der sich von unten nach oben konisch verjüngt, sowie einen Ansaugstutzen 5. Vorzugsweise ist der Außenkorb 3 als Lochblech-Außenkorb ausgebildet, und der Innenkorb 4 ist als Lochblech-Innenkorb ausgebildet. Wie dem Fachmann bekannt ist, kann anstelle von Lochblech auch Streckblech verwendet werden. Sowohl der Außenkorb 3 als auch der Innenkorb 4 können auch aus Streckblech hergestellt werden. Streckblech wird hergestellt, indem in ein Blech versetzte Einschnitte unter gleichzeitiger streckender Verformung des Blechs ausgeführt werden.

Die Aktivkohlepartikel zum Reinigen der Luft werden in den ringförmig umlaufenden Zwischenraum zwischen dem Innenkorb 4 und dem Außenkorb 3 eingefüllt. Dadurch entsteht eine zwischen dem Innenkorb 4 und dem Außenkorb 3 angeordnete ringförmig umlaufende Aktivkohleschicht 6.

Zum Reinigen von verschmutzter Luft wird der Ansaugstutzen 5 mit dem Lufteinlass eines Ventilators oder eines Sauggebläses verbunden. Dadurch wird Luft aus dem Inneren der Aktivkohlefilterpatrone abgesogen, wie dies in Fig. 1 durch den Pfeil 7 veranschaulicht ist. Zum Ausgleich strömt von außen Luft in Richtung der Pfeile 8 durch die Aktivkohleschicht 6 hindurch ins Innere der Luftfilterpatrone nach. Dabei wird die Luft beim Durchströmen der Aktivkohleschicht 6 gereinigt, und die unangenehmen Gerüche werden durch die Aktivkohlepartikel der Aktivkohleschicht 6 absorbiert. Auf diese Weise wird eine Reinigung der durchströmenden Luft erzielt.

Die kreisrunde Bodenscheibe 2 weist typischerweise einen Durchmesser im Bereich zwischen 15 cm und 30 cm auf, beispielsweise einen Durchmesser von etwa 23 cm. Bei der Bodenscheibe 2 handelt es sich vorzugsweise um ein Metallteil. Vorzugsweise handelt es sich bei der Bodenscheibe 2 um ein Metallformteil. Vorzugsweise wird das Metallformteil unter Verwendung von Metallformtechniken in die gewünschte Form gebracht, beispielsweise mittels eines Hochleistungsdrückautomaten.

Die Bodenscheibe 2 weist in ihrem Zentrum einen erhöhten Dom 9 auf, dessen Durchmesser in etwa dem Durchmesser am unteren Ende des Innenkorbs 4 entspricht. Der erhöhte Dom 9 dient zur Halterung des Innenkorbs 4, dessen unteres Ende auf den erhöhten Dom 9 aufgesetzt wird. Der erhöhte Dom 9 kann vorzugsweise durch Tiefziehen hergestellt werden. Die Bodenscheibe 2 wird mit dem unteren Ende des Außenkorbs 3 mittels einer Mehrzahl von Schweißpunkten 10¹ verbunden.

Der Außenkorb 3 weist typischerweise einen Durchmesser im Bereich von 15 cm bis 30 cm auf, beispielsweise einen Durchmesser von etwa 23 cm. Der Außenkorb 3 weist typischerweise eine Länge im Bereich von 30 cm bis 60 cm auf, beispielsweise eine Länge von etwa 50 cm. Der Außenkorb 3 besitzt eine zylindrische Form; sein Durchmesser ist über die gesamte Länge hinweg konstant.

Dagegen weist der Innenkorb 4 eine konische Form auf. Der Durchmesser des Innenkorbs 4 verringert sich von der Bodenscheibe 2 zum Ansaugstutzen 5 hin stetig. Der Durchmesser am unteren Ende des Innenkorbs 4 ist also etwas größer als der Durchmesser am oberen Ende des Innenkorbs 4. Die Länge des Innenkorbs 4 entspricht in etwa der Länge des Außenkorbs 3.

Infolge der konisch zulaufenden Form des Innenkorbs 4 verringert sich die Schichtdicke der Aktivkohleschicht 6 vom Ansaugstutzen 5 zur Bodenscheibe 2 hin stetig. Im Bereich des Ansaugstutzens 5 ist die Schichtdicke der Aktivkohleschicht 6 daher am größten. Beispielsweise kann die Aktivkohleschicht 6 im Bereich des Ansaugstutzens 5 eine Schichtdicke von etwa 5 cm aufweisen, während die Schichtdicke im Bereich der Bodenscheibe 2 beispielsweise 4 cm betragen kann.

Der Ansaugstutzen 5 ist als Deckel der Aktivkohlefilterpatrone 1 ausgebildet. Bei dem Ansaugstutzen 5 handelt es sich vorzugsweise um ein Metallteil. Vorzugsweise handelt es sich bei dem Ansaugstutzen 5 um ein Metallformteil. Vorzugsweise wird das Metallformteil unter Verwendung von Metallformtechniken in die gewünschte Form gebracht, beispielsweise mit Hilfe eines Hochleistungsdrückautomaten.

Der Ansaugstutzen 5 weist eine kreisförmig umlaufende Sicke 11 auf, deren Durchmesser in etwa dem Durchmesser am oberen Ende des Innenkorbs 4 entspricht. Dadurch kann das obere Ende des Innenkorbs 4 auf die umlaufende Sicke 11 aufgeschoben bzw. aufgesteckt werden, wobei das obere Ende des Innenkorbs 4 durch die umlaufende Sicke 11 fixiert wird.

Der Innenkorb 4 wird also am unteren Ende durch den erhöhten Dom 9 und am oberen Ende durch die umlaufende Sicke 11 gehaltert. Durch diese frei schwebende Halterung des Innenkorbs 4 im Inneren der Aktivkohlefilterpatrone wird ein einfaches Zusammenbauen und Auseinanderbauen der Aktivkohlefilterpatrone ermöglicht. Die Verbindung zwischen dem oberen Ende des Außenkorbs 3 und dem Ansaugstutzen 5 wird vorzugsweise mittels einer Mehrzahl von Blindnieten 12 hergestellt.

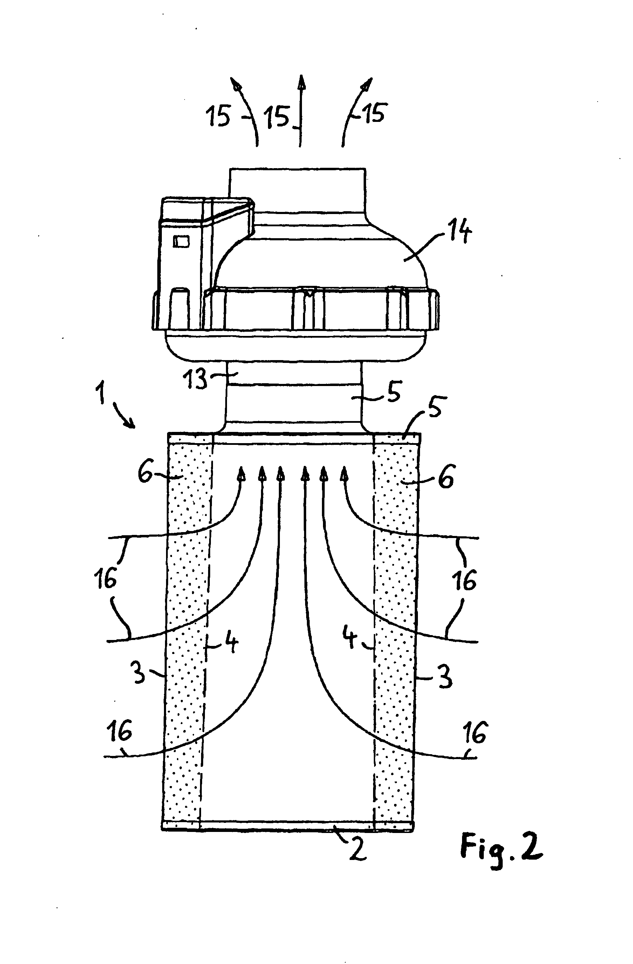

Die Funktionsweise eines Aktivkohlekorbfilters entsprechend den Ausführungsformen der vorliegenden Erfindung ist in Fig. 2 veranschaulicht. Der Ansaugstutzen 5 der Aktivkohlefilterpatrone 1 wird auf den Lufteinlass 13 eines Sauggebläses 14 aufgesteckt. Wenn das Sauggebläse 14 eingeschaltet wird, wird Luft aus dem Inneren der Aktivkohlefilterpatrone 1 über den Ansaugstutzen 5 und den Lufteinlass 13 nach draußen gefördert, wie dies durch die Pfeile 15 veranschaulicht ist. Dadurch entsteht im Inneren der Aktivkohlefilterpatrone 1 ein Unterdruck. Zum Ausgleich dieses Unterdrucks strömt Luft von außen durch die Aktivkohleschicht 6 hindurch von allen Seiten her ins Innere der Aktivkohlefilterpatrone 1. Dies ist in Fig. 2 durch die Pfeile 16 dargestellt. Beim Durchströmen der Aktivkohleschicht 6 wird die Luft von Verunreinigungen und Geruchsstoffen gereinigt.

Im Inneren der Aktivkohlefilterpatrone 1 wird durch das Sauggebläse 14 ein Unterdruck erzeugt. Dieser Unterdruck ist im Bereich direkt unterhalb des Ansaugstutzens 5 besonders stark ausgeprägt. Wegen der von außen nachströmenden Luft nimmt der Unterdruck in Richtung zur Bodenscheibe 2 hin stetig ab. Im Bereich unterhalb des Ansaugstutzens 5 ist der Unterdruck deutlich stärker ausgeprägt als im Bereich oberhalb der Bodenscheibe 2, so dass sich während des laufenden Betriebs ein Druckgradient in Richtung vom Ansaugstutzen 5 zur Bodenscheibe 2 hin ausbildet. Die Druckdifferenz zwischen Innenraum und Außenraum der Aktivkohlefilterpatrone 1 ist im Bereich unterhalb des Ansaugstutzens 5 am größten und im Bereich oberhalb der Bodenscheibe 2 am geringsten.

Diesem im Inneren der Aktivkohlefilterpatrone 1 auftretenden Druckgradienten wird bei der Aktivkohlefilterpatrone 1 durch die konisch zulaufende Form des Innenkorbs 4 Rechnung getragen. Der Innenkorb 4 verjüngt sich in Richtung von der Bodenscheibe 2 zum Ansaugstutzen 5 hin. Im Bereich der Bodenscheibe 2 ist der Durchmesser des Innenkorbs 4 größer als im Bereich des Ansaugstutzens 5. Der Durchmesser des Außenkorbs 3 ist dagegen über die gesamte Länge der Aktivkohlefilterpatrone 1 hinweg konstant.

Infolge der konischen Form des Innenkorbs 3 verringert sich die Schichtdicke der Aktivkohleschicht 6 vom Ansaugstutzen 5 zur Bodenscheibe 2 hin. Im Bereich unterhalb des Ansaugstutzens 5 bildet sich ein relativ ausgeprägter Unterdruck aus. Dementsprechend ist die Schichtdicke der Aktivkohleschicht 6 hier am größten. Im Bereich unterhalb des Ansaugstutzens 5 kann die Aktivkohleschicht 6 beispielsweise ca. 5 cm dick sein.

In Richtung zur Bodenscheibe 2 hin wird die Schichtdicke der Aktivkohleschicht 6 immer geringer. Der Bereich über der Bodenscheibe 2 ist vom Ansaugstutzen 5 weit entfernt, und hier wird daher nur ein geringer Unterdruck ausgebildet. Dementsprechend ist die Schichtdicke der Aktivkohleschicht 6 im Bereich über der Bodenscheibe 2 am geringsten. Im Bereich oberhalb der Bodenscheibe 2 kann die Aktivkohleschicht 6 beispielsweise ca. 4 cm dick sein.

Bei der Aktivkohlefilterpatrone 1 entsprechend den Ausführungsformen der vorliegenden Erfindung wird die Schichtdicke der Aktivkohleschicht 6 also entsprechend dem im Inneren der Aktivkohlefilterpatrone 1 auftretenden Druckgradienten variiert. Je größer die Druckdifferenz zwischen Innen- und Außenraum ist, desto dicker ist die von der durchströmenden Luft zu durchdringende Aktivkohleschicht 6 ausgebildet.

Im Bereich unterhalb des Ansaugstutzens 5 ist der vom Sauggebläse 14 erzeugte Unterdruck am stärksten ausgeprägt, und die Druckdifferenz zwischen Innen- und Außenraum der Aktivkohlefilterpatrone 1 ist relativ groß. Passend zu der hohen Druckdifferenz wird im Bereich unterhalb des Ansaugstutzens 5 die Schichtdicke der zu durchströmenden Aktivkohleschicht 6 relativ groß gewählt.

In Richtung zur Bodenscheibe 2 hin nimmt der Unterdruck wegen der nachströmenden Luft kontinuierlich ab. Im Bereich oberhalb der Bodenscheibe 2 ist der Unterdruck nur mehr relativ schwach ausgebildet, und die Druckdifferenz zwischen Innen- und Außenraum ist relativ gering. Passend zu der relativ geringen Druckdifferenz zwischen Innen- und Außenraum wird die Schichtdicke der Aktivkohleschicht 6 im Bereich über der Bodenscheibe 2 daher relativ gering gewählt.

Durch die stetige Verringerung der Schichtdicke der Aktivkohleschicht 6 vom Ansaugstutzen 5 zur Bodenscheibe 2 hin wird über die gesamte Mantelfläche der Aktivkohlefilterpatrone 1 hinweg eine gleichmäßige Durchströmung mit Luft erreicht. Auch im Bereich oberhalb der Bodenscheibe 2, wo der vom Sauggebläse 14 erzeugte Unterdruck nicht mehr allzu stark ist, kann noch ein ausreichend hoher Luftdurchsatz erreicht werden, weil die Schichtdicke der Aktivkohleschicht 6 in diesem Bereich entsprechend dünn gewählt wird. Die gleichmäßige Durchströmung der Aktivkohleschicht 6 ermöglicht über die gesamte Länge der Aktivkohlefilterpatrone 1 hinweg eine gleichmäßige Luftreinigung. Die gesamte Länge der Aktivkohlefilterpatrone wird für die Reinigung der durch die Aktivkohleschicht 6 strömenden Luft genutzt. Wegen der verbesserten Ausnutzung der gesamten Aktivkohleschicht 6 über ihre gesamte Länge hinweg wird eine verbesserte Effizienz gegenüber herkömmlichen Lösungen erzielt.

Durch die gleichmäßige Durchströmung der Aktivkohleschicht 6 über die gesamte Länge der Aktivkohlefilterpatrone 1 hinweg wird außerdem eine gleichmäßigere Beladung der Aktivkohlepartikel mit Verunreinigungen und Schmutz als bei herkömmlichen Lösungen erzielt. Infolge des gleichmäßigen Luftdurchsatzes werden sowohl die Aktivkohlepartikel im Bereich des Ansaugstutzens 5 als auch die Aktivkohlepartikel im Bereich der Bodenscheibe 2 gleichmäßig mit Verunreinigungen und Schadstoffen beladen. Die Reinigungskapazität der Aktivkohlepartikel kann so über die gesamte Länge der Aktivkohlefilterpatrone 1 hinweg optimal ausgenutzt werden. Wenn es dann soweit sein sollte, dass die Aktivkohlepartikel stark verschmutzt sind und ausgewechselt werden müssen, können die Aktivkohlepartikel der Aktivkohleschicht 6 auf einfache Weise durch frische und saubere Aktivkohlepartikel ersetzt werden.

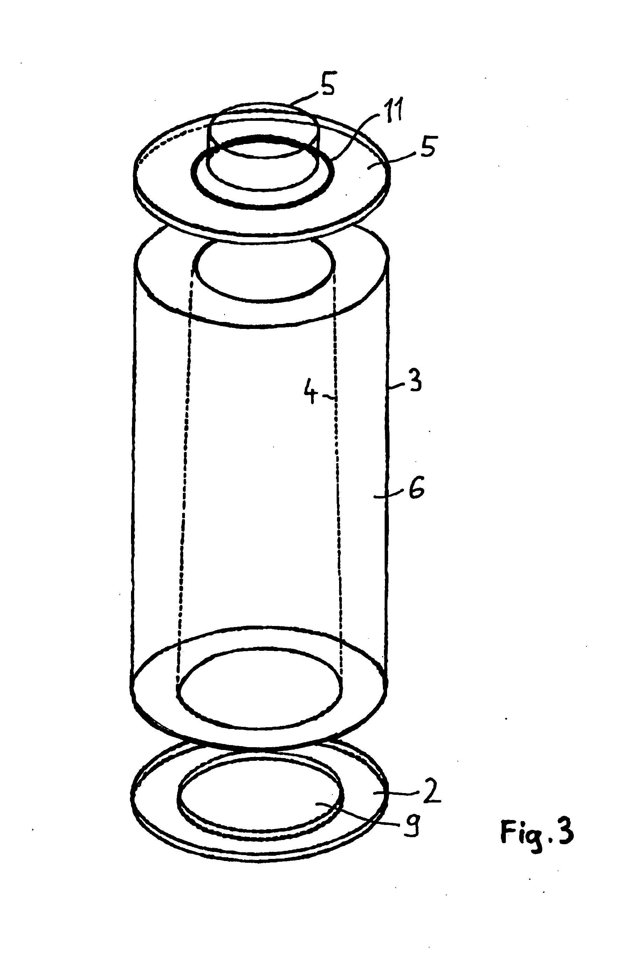

Als weiterer Vorteil der Aktivkohlefilterpatrone 1 entsprechend den Ausführungsformen der vorliegenden Erfindung ist der einfache Zusammenbau zu nennen, der in Fig. 3 veranschaulicht ist. Beim Zusammenbau der Aktivkohlefilterpatrone 1 wird zuerst der zylindrisch geformte Außenkorb 3 auf die Bodenscheibe 2 aufgesetzt bzw. aufgesteckt. Dabei kann die mechanische Verbindung zwischen der Bodenscheibe 2 und dem unteren Ende des Außenkorbs 3 beispielsweise durch eine Mehrzahl von Schweißpunkten fixiert werden.

Anschließend wird das breitere Ende des konisch geformten Innenkorbs 4 auf den erhöhten Dom 9 der Bodenscheibe 2 aufgesetzt bzw. aufgesteckt. Zwischen dem Außenkorb 3 und dem Innenkorb 4 entsteht ein ringförmig umlaufender Zwischenraum, in den von oben Aktivkohlepartikel eingefüllt werden können. Auf diese Weise wird zwischen dem Außenkorb 3 und dem Innenkorb 4 eine Aktivkohleschicht 6 ausgebildet.

Daraufhin wird der Ansaugstutzen 5 auf das obere Ende des Innenkorbs 4 und des Außenkorbs 3 aufgesetzt. An der Unterseite des Ansaugstutzens 5 ist die ringförmige Sicke 11 ausgebildet. Beim Aufsetzen des Ansaugstutzens 5 auf den Innenkorb 4 und den Außenkorb 3 wird das schmale Ende des konisch zulaufenden Innenkorbs 4 auf die ringförmige Sicke 11 aufgeschoben, wobei das obere Ende des Innenkorbs 4 durch die Sicke 11 gehaltert wird. Insofern ist der konisch zulaufende Innenkorb 4 am unteren Ende durch den erhöhten Dom 9 der Bodenscheibe 2 und am oberen Ende durch die ringförmige Sicke 11 des Ansaugstutzens 5 fixiert. Abschließend wird mittels einer Mehrzahl von Blindnieten 12 eine mechanische Verbindung zwischen dem oberen Rand des Außenkorbs 3 und dem Ansaugstutzen 5 hergestellt.

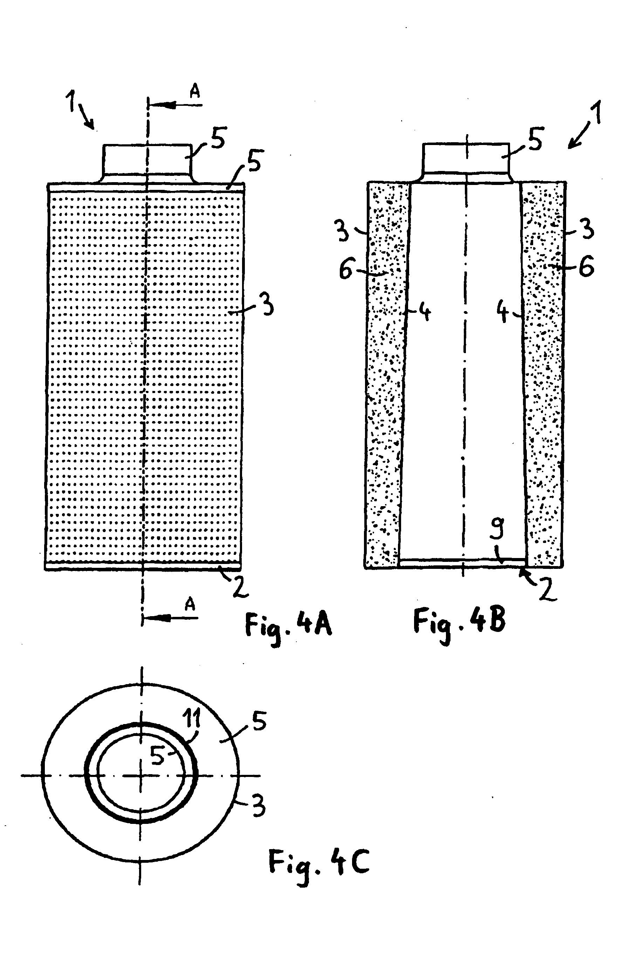

In Fig. 4A bis 4C sind weitere Ansichten der Aktivkohlefilterpatrone 1 gezeigt. Fig. 4A zeigt eine Seitenansicht der Aktivkohlefilterpatrone 1. Zu erkennen ist der luftdurchlässige Außenkorb 3, der vorzugsweise aus einem Lochblech gebildet ist. Am unteren Ende des Außenkorbs 3 befindet sich die Bodenscheibe 2. Am oberen Ende des Außenkorbs 3 ist der Ansaugstutzen 5 angebracht.

In Fig. 4B ist ein Längsschnitt durch die Aktivkohlefilterpatrone 1 entlang der Schnittebene A-A gezeigt. Die Schnittebene A-A ist in Fig. 4A strichpunktiert eingezeichnet. In Fig. 4B sind der zylindrische Außenkorb 3, der konisch zulaufende Innenkorb 4 und die dazwischen angeordnete Aktivkohleschicht 6 zu erkennen. Außerdem ist zu erkennen, dass die Aktivkohleschicht 6 auf der dem Ansaugstutzen 5 zugewandten Seite dicker ausgebildet ist als im Bereich der Bodenscheibe 2. Am unteren Ende der Aktivkohlefilterpatrone 1 ist die Bodenscheibe 2 mit dem erhöhten Dom 9 angeordnet. Am oberen Ende der Aktivkohlefilterpatrone 1 ist der Ansaugstutzen 5 angebracht.

Fig. 4C zeigt eine Draufsicht auf die Aktivkohlefilterpatrone 1. Zu erkennen sind der zylindrischen Außenkorb 3 sowie der Ansaugstutzen 5 mit der ringförmig umlaufenden Sicke 11.

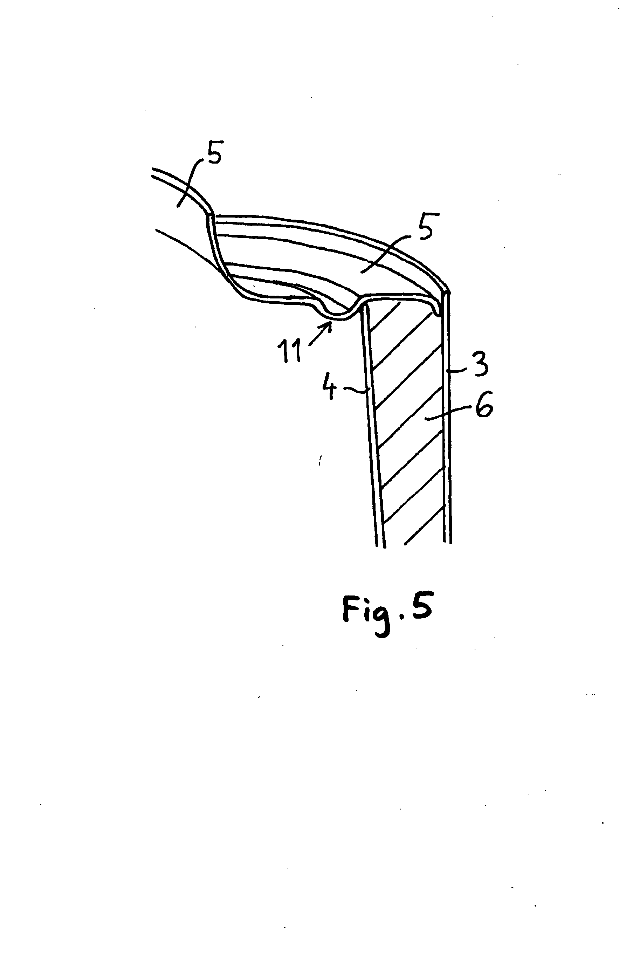

Fig. 5 zeigt, wie das obere Ende des konisch zulaufenden Innenkorbs 4 durch die umlaufende Sicke 11 gehaltert wird. Hierzu ist ein Bereich des Ansaugstutzens 5 vergrößert herausgezeichnet. Zu erkennen sind das obere Ende des zylindrischen Außenkorbs 3, das obere Ende des konisch zulaufenden Innenkorbs 4 sowie die dazwischen befindliche Aktivkohleschicht 6. Der Ansaugstutzen 5 wird auf das obere Ende der Aktivkohlefilterpatrone so aufgesetzt, dass die obere Öffnung des konisch zulaufenden Innenkorbs 4 auf die ringförmig umlaufende Sicke 11 aufgeschoben wird. Dadurch wird die obere Öffnung des Innenkorbs 4 durch die ringförmig umlaufende Sicke 11 in Position gehalten und fixiert. Anschließend wird der obere Rand des Außenkorbs 3 mit dem Ansaugstutzen 5 mittels einer Mehrzahl von Blindnieten mechanisch verbunden.

Im Folgenden werden bevorzugte Ausführungsformen der Erfindung näher diskutiert.

Patronenfilter üblicher Bauart haben eine konstante Schichtstärke des Aktivkohlebetts, dies hat den Nachteil, dass der Luftstromdurchsatz saugseitig größer ist als der Luftstrom am Boden des Filters. Dies kommt dadurch zustande, dass der durch den Luftstrom entstehende Druckabfall an der Aktivkohle durch die Bettdicke der Aktivkohle bestimmt wird. Die Aktivkohle wird nicht gleichmäßig belastet. Die Anwendung z. B. in einer Großküchen-Abzugshaube erfordert einen gleichmäßigen Luftstromdurchsatz saugseitig sowie auch am Boden des Filters, um eine konstante Absaugung der Küchendämpfe über die komplette Breite z. B. über eine Fritteuse zu gewährleisten. Folgende Erfindung löst die aufgeführten Probleme. Weitere Anwendungen sind z. B. Lackierbetriebe, Metzgereien, Toiletten, Tierbehausungen, Tierfutterindustrie überall dort, wo unerwünschte Gerüche entstehen.

Gemäß einer bevorzugten Ausführungsform ist der Aktivkohlekorbfilter dadurch gekennzeichnet, dass der Lochblech-Innenkorb sich von der Bodenscheibe in Richtung Ansaugstutzen verjüngt bzw. konisch zuläuft. Der Außendurchmesser des zylindrischen Filters ist dadurch gekennzeichnet, dass er über die ganze Länge gleich ist. Das Aktivkohlebett saugseitig des Filters weist zum Beispiel eine Schichtstärke von 5 cm auf, am Boden des Filters 4 cm. Durch die sich verkleinernde Schichtstärke der Aktivkohle in Richtung Bodenscheibe des Filters fällt auch der Druckabfall linear ab, somit wird ein konstanter Luftdurchsatz erreicht.

Dieser Ausführungsform liegt das Problem zugrunde, eine Aktivkohleluftfilterwechselpatrone zu schaffen, die eine schnelle Montage sowie Demontage ermöglicht, wiederbefüllbar ist, eine maximal mögliche Filterfläche bei minimaler Einbaugröße gewährleistet sowie über die ganze Filterfläche gleichmäßigen Luftdurchsatz hat, um somit die Aktivkohle gleichmäßig zu beladen und eine gleichmäßige Absaugung zu gewährleisten.

Gemäß einer bevorzugten Ausführungsform ist die Montage des Lochblech-Innenkorbes dadurch gekennzeichnet, dass dieser frei schwebend im Filter montiert und durch die Sicke am Ansaugstutzen fixiert wird. Die Fixierung an der Bodenscheibe des Filters ist dadurch gekennzeichnet, dass der Lochblech-Innenkorb durch den an der Bodenscheibe tiefgezogenen Dom fixiert wird. Der Ansaugstutzen wird mit dem Lochblech-Außenkorb mit Blindnieten befestigt. Die Bodenscheibe wird mit dem Außenkorb punktverschweißt.

Dieser Ausführungsform liegt das Problem zugrunde, den Lochblech-Innenkorb so zu gestalten, dass dieser konisch zuläuft, ohne Befestigungsmittel frei zu montieren ist, nach der Montage gleiche Schichtdicke der Aktivkohle gewährleistet, sowie im Herstellungsprozess und im Fall der Wiederbefüllung einfach zu montieren bzw. zu demontieren ist.

## Patentansprüche

1. Eine Filterpatrone (1) zum Reinigen von Luft, welche aufweist
- einen Lochblech-Außenkorb (3),
- eine Bodenscheibe (2), die die Filterpatrone (1) am unteren Ende abschließt,
- einen Ansaugstutzen (5), der die Filterpatrone (1) am oberen Ende abschließt,
- einen konisch geformten Lochblech-Innenkorb (4), der sich im Inneren des Lochblech-Außenkorbs (3) von der Bodenscheibe (2) zum Ansaugstutzen (5) erstreckt und durch die Bodenscheibe (2) und den Ansaugstutzen (5) fixiert ist,
- eine Aktivkohleschicht (6), die im Zwischenraum zwischen Lochblech-Innenkorb (4) und Lochblech-Außenkorb (3) angeordnet ist,
**dadurch gekennzeichnet, dass**
- der Lochblech-Außenkorb (3) von zylindrischer Form ist und der Durchmesser des Lochblech-Außenkorbs (3) über die ganze Länge der Filterpatrone (1) gleich ist,
- sich der Lochblech-Innenkorb (4) in Richtung von der Bodenscheibe (2) zum Ansaugstutzen (5) hin konisch verjüngt, wobei der Durchmesser des Lochblech-Innenkorbs (4) von der Bodenscheibe (2) zum Ansaugstutzen (5) hin stetig abnimmt, und
- sich die Schichtstärke der Aktivkohleschicht (6) infolge der zylindrischen Form des Lochblech-Außenkorbs (3) und der konischen Form des Lochblech-Innenkorbs (4) in Richtung vom Ansaugstutzen (5) zur Bodenscheibe (2) hin verkleinert.

2. Filterpatrone nach Anspruch 1, **gekennzeichnet durch** mindestens eines von folgenden:
- die Filterpatrone ist dazu ausgelegt, dass Luft von außen **durch** die Aktivkohleschicht hindurch ins Innere der Filterpatrone gesaugt wird;
- die Filterpatrone ist dazu ausgelegt, dass Luft aus dem Inneren der Filterpatrone über den Ansaugstutzen abgesaugt wird, wobei Luft von außen **durch** die Aktivkohleschicht hindurch in das Innere der Filterpatrone nachströmt.

3. Filterpatrone nach Anspruch 1 oder Anspruch 2, **dadurch gekennzeichnet, dass** das Ende des Lochblech-Innenkorbs, das den kleineren Innendurchmesser aufweist, zum Ansaugstutzen hin orientiert ist, und dass das Ende des Lochblech-Innenkorbs, das den größeren Innendurchmesser aufweist, zur Bodenscheibe hin orientiert ist.

4. Filterpatrone nach einem der Ansprüche 1 bis 3, **dadurch gekennzeichnet, dass** die Filterpatrone infolge der konischen Form des Lochblech-Innenkorbs einen über die gesamte Aktivkohleschicht hinweg konstanten Luftdurchsatz aufweist.

5. Filterpatrone nach einem der Ansprüche 1 bis 4, **gekennzeichnet durch** mindestens eines von folgenden:
- der Lochblech-Außenkorb ist mittels einer Mehrzahl von Punktverschweißungen an der Bodenscheibe befestigt;
- der Lochblech-Außenkorb ist mittels einer Mehrzahl von Blindnieten am Ansaugstutzen befestigt.

6. Filterpatrone nach einem der Ansprüche 1 bis 5, **dadurch gekennzeichnet, dass** es sich bei der Bodenscheibe und bei dem Ansaugstutzen jeweils um Metallteile handelt.

7. Filterpatrone nach einem der Ansprüche 1 bis 6, **gekennzeichnet durch** mindestens eines von folgenden:
- der Lochblech-Innenkorb ist frei schwebend in der Filterpatrone montiert;
- der Lochblech-Innenkorb ist im Inneren des Lochblech-Außenkorbs konzentrisch zum Außenkorb angeordnet;
- der Lochblech-Innenkorb ist im Inneren des Lochblech-Außenkorbs zwischen dem Ansaugstutzen und der Bodenscheibe fixiert;
- der Lochblech-Innenkorb ist an seinem unteren Ende **durch** die Bodenscheibe und an seinem oberen Ende **durch** den Ansaugstutzen gehaltert;
- die Bodenscheibe und der Ansaugstutzen sind so geformt, dass der Lochblech-Innenkorb zwischen der Bodenscheibe und dem Ansaugstutzen fixiert ist;
- die Bodenscheibe weist einen mittig angeordneten tiefgezogenen Dom auf, wobei der Durchmesser des tiefgezogenen Doms in etwa dem Innendurchmesser am unteren Ende des Lochblech-Innenkorbs entspricht, wobei der Lochblech-Innenkorb mit seinem unteren Ende auf den Dom aufsetzbar ist, und wobei **durch** den Dom das untere Ende des Lochblech-Innenkorbs fixierbar ist;
- der Ansaugstutzen weist eine kreisförmig umlaufende Sicke auf, wobei der Durchmesser der Sicke etwa dem Innendurchmesser des Lochblech-Innenkorbs an dessen oberem Ende entspricht, wobei der Lochblech-Innenkorb mit seinem oberen Ende auf die kreisförmig umlaufende Sicke aufsetzbar ist, und wobei **durch** die umlaufende Sicke das obere Ende des Lochblech-Innenkorbs fixierbar ist.

8. Filterpatrone nach einem der Ansprüche 1 bis 7, **gekennzeichnet durch** mindestens eines von folgenden:
- die Schichtstärke der Aktivkohleschicht am Ansaugstutzen beträgt etwa 5 cm;
- die Schichtstärke der Aktivkohleschicht an der Bodenscheibe beträgt etwa 4 cm;
- die Filterpatrone weist eine Länge von etwa 50 cm auf;
- die Filterpatrone weist einen Durchmesser von etwa 23 cm auf;
- die Filterpatrone weist eine Länge im Bereich von 30 cm bis 70 cm auf;
- die Filterpatrone weist einen Durchmesser im Bereich von 15 cm bis 30 cm auf;
- der Ansaugstutzen weist einen Durchmesser im Bereich von 8 cm bis 20 cm auf.

9. Eine Filtervorrichtung zum Reinigen von Luft, welche aufweist:
- eine Filterpatrone (1) nach einem der Ansprüche 1 bis 8;
- ein Sauggebläse (14), dessen Lufteinlass (13) mit dem Ansaugstutzen (5) der Filterpatrone (1) lösbar verbindbar ist.

10. Filtervorrichtung nach Anspruch 9, **dadurch gekennzeichnet, dass** das Sauggebläse dazu ausgelegt ist, Luft aus dem Inneren der Filterpatrone über den Ansaugstutzen abzusaugen, wobei Luft von außen durch die Aktivkohleschicht hindurch in das Innere der Filterpatrone nachströmt.

11. Filtervorrichtung nach Anspruch 9 öder Anspruch 10, **dadurch gekennzeichnet, dass** es sich bei der Filterpatrone um eine Wechselpatrone handelt.

12. Filtervorrichtung nach einem der Ansprüche 9 bis 11, **dadurch gekennzeichnet, dass** die Filtervorrichtung zur Reinigung der Luft in mindestens einem von folgenden vorgesehen ist: eine Großküche, eine Metzgerei, ein Lackierbetrieb, Toiletten, Tierbehausungen, Tierfutterindustrie.

13. Verfahren zur Montage einer Filterpatrone (1), welche zum Reinigen von Luft ausgelegt ist, ausgehend von
- einem zylinderförmigen Lochblech-Außenkorb (3),
- einer Bodenscheibe (2),
- einem Ansaugstutzen (5), und
- einem Lochblech-Innenkorb (4), dessen Form sich konisch verjüngt,
**gekennzeichnet durch** folgende Schritte:
- Aufsetzen des Lochblech-Außenkorbs (3) auf die Bodenscheibe (2),
- Aufsetzen des sich nach oben hin konisch verjüngenden Lochblech-Innenkorbs (4) auf die Bodenscheibe (2),
- Einbringen einer Aktivkohleschicht (6) in den Zwischenraum zwischen Lochblech-Innenkorb (4) und Lochblech-Außenkorb (3);
- Aufschieben des Ansaugstutzens (5) auf das obere Ende von Lochblech-Innenkorb (4) und Lochblech-Außenkorb (3), wobei der Lochblech-Innenkorb (4) zwischen der Bodenscheibe (2) und dem Ansaugstutzen (5) fixiert wird.

14. Verfahren nach Anspruch 13, **gekennzeichnet durch** mindestens einen der folgenden weiteren Schritte:
- Befestigen des Lochblech-Außenkorbs an der Bodenscheibe **durch** eine Mehrzahl von Punktverschweißungen;
- Befestigen des Lochblech-Außenkorbs am Ansaugstutzen **durch** eine Mehrzahl von Blindnieten.

## Claims

1. A filter cartridge (1) for cleaning air, comprising
- a perforated sheet metal outer cage (3),
- a base disc (2) closing off the filter cartridge (1) at the lower end,
- an inlet fitting (5) closing off the filter cartridge (1) at the upper end,
- a conically shaped perforated sheet metal inner cage (4) extending from the base disc (2) to the inlet fitting (5) in the interior of the perforated sheet metal outer cage (3) and held in place by the base disc (2) and the inlet fitting (5),
- an activated carbon layer (6) disposed in the intermediate space between the perforated sheet metal inner cage (4) and the perforated sheet metal outer cage (3),
**characterized in that**
- the perforated sheet metal outer cage (3) has a cylindrical shape and the diameter of the perforated sheet metal outer cage (3) is identical over the entire length of the filter cartridge (1),
- the perforated sheet metal inner cage (4) tapers conically in the direction from the base disc (2) to the inlet fitting (5), wherein the diameter of the perforated sheet metal inner cage (4) continuously diminishes from the base disc (2) toward the inlet fitting (5), and
- the thickness of the activated carbon layer (6) diminishes in the direction from the inlet fitting (5) to the base disc (2) owing to the cylindrical shape of the perforated sheet metal outer cage (3) and the conical shape of the perforated sheet metal inner cage (4).

2. Filter cartridge according to claim 1, **characterized by** at least one of the following:
- the filter cartridge is designed such that air from the outside is drawn in through the activated carbon layer into the interior of the filter cartridge;
- the filter cartridge is designed such that air from the interior of the filter cartridge is drawn off via the inlet fitting, wherein air from the outside is drawn through the activated carbon layer into the interior of the filter cartridge.

3. Filter cartridge according to claim 1 or claim 2, **characterized in that** the end of the perforated sheet metal inner cage comprising the smaller inner diameter is oriented toward the inlet fitting and the end of the perforated sheet metal inner cage comprising the larger inner diameter is oriented toward the base disc.

4. Filter cartridge according to any one of the claims 1 through 3, **characterized in that** the filter cartridge comprises a constant airflow over the entire activated carbon layer owing to the conical shape of the perforated sheet metal inner cage.

5. Filter cartridge according to any one of the claims 1 through 4, **characterized by** at least one of the following:
- the perforated sheet metal outer cage is attached to the base disc by means of a plurality of spot welds;
- the perforated sheet metal outer cage is attached to the inlet fitting by means of a plurality of blind rivets.

6. Filter cartridge according to any one of the claims 1 through 5, **characterized in that** the base disc and the inlet fitting are each metal parts.

7. Filter cartridge according to any one of the claims 1 through 6, **characterized by** at least one of the following:
- the perforated sheet metal inner cage is installed in the filter cartridge in a free-floating manner;
- the perforated sheet metal inner cage is disposed concentric to the outer cage in the interior of the perforated sheet metal outer cage;
- the perforated sheet metal inner cage is held in place between the inlet fitting and the base disc in the interior of the perforated sheet metal outer cage;
- the perforated sheet metal inner cage is supported at the lower end by the base disc and at the upper end by the inlet fitting;
- the base disc and the inlet fitting are shaped such that the perforated sheet metal inner cage is held in place between the base disc and the inlet fitting;
- the base disc comprises a deep-drawn dome in the center thereof, wherein the diameter of the deep-drawn dome corresponds approximately to the inner diameter at the lower end of the perforated sheet metal inner cage, wherein the lower end of the perforated sheet metal inner cage can be placed on the dome, and wherein the lower end of the perforated sheet metal inner cage can be held in place by the dome;
- the inlet fitting comprises a circular circumferential groove, wherein the diameter of the groove corresponds approximately to the inner diameter of the perforated sheet metal inner cage at the upper end thereof, wherein the upper end of the perforated sheet metal inner cage can be placed on the circular circumferential groove, and wherein the upper end of the perforated sheet metal inner cage can be held in place by the circumferential groove.

8. Filter cartridge according to any one of the claims 1 through 7, **characterized by** at least one of the following:
- the thickness of the activated carbon layer at the inlet fitting is about 5 cm;
- the thickness of the activated carbon layer at the base disc is about 4 cm;
- the filter cartridge comprises a length of about 50 cm;
- the filter cartridge comprises a diameter of about 23 cm;
- the filter cartridge comprises a length in the range of 30 cm to 70 cm;
- the filter cartridge comprises a diameter in the range of 15 cm to 30 cm;
- the inlet fitting has a diameter in the range of 8 cm to 20 cm.

9. A filter device for cleaning air, comprising:
- a filter cartridge (1) according to any one of the claims 1 through 8;
- a suction blower (14), the air inlet (13) thereof being releasably connected to the inlet fitting (5) of the filter cartridge (1).

10. Filter device according to claim 9, **characterized in that** the suction blower is designed for drawing air out through the inlet fitting from the interior of the filter cartridge, wherein air from the outside is drawn into the interior of the filter cartridge through the activated carbon layer.

11. Filter device according to claim 9 or claim 10, **characterized in that** the filter cartridge is a replaceable cartridge.

12. Filter device according to any one of the claims 9 through 11, **characterized in that** the filter device is provided for cleaning the air in at least one of the following: a large kitchen, a butcher's shop, a painting shop, toilets, animal pens, the animal feed industry.

13. A method for assembling a filter cartridge (1) designed for cleaning air and made from
- a cylindrical perforated sheet metal outer cage (3),
- a base disc (2),
- an inlet fitting (5), and
- a perforated sheet metal inner cage (4), the shape of which tapers conically,
**characterized by** the following steps:
- placing the perforated sheet metal outer cage (3) on the base disc (2),
- placing the upwardly conically tapering perforated sheet metal inner cage (4) on the base disc (2),
- introducing an activated carbon layer (6) into the intermediate space between the perforated sheet metal inner cage (4) and the perforated sheet metal outer cage (3);
- sliding the inlet fitting (5) onto the upper end of the perforated sheet metal inner cage (4) and the perforated sheet metal outer cage (3), wherein the perforated sheet metal inner cage (4) is held in place between the base disc (2) and the inlet fitting (5).

14. The method according to claim 13, **characterized by** at least one of the following further steps:
- attaching the perforated sheet metal outer cage to the base disc by means of a plurality of spot welds;
- attaching the perforated sheet metal outer cage to the inlet fitting by means of a plurality of blind rivets.

## Revendications

1. Une cartouche de filtre (1) permettant de nettoyer l'air présentant
- une crépine externe à tôle perforée (3),
- une plaque de fond (2) fermant la cartouche du filtre (1) à l'extrémité inférieure,
- un raccord d'aspiration (5) fermant la cartouche du filtre (1) à l'extrémité supérieure,
- une crépine interne conique à tôle perforée (4) se trouvant dans la crépine externe à tôle perforée (3), allant du plaque de fond (2) au raccord d'aspiration (5) et fixée par le plaque de fond (2) et le raccord d'aspiration (5),
- une couche de charbon actif (6) disposée dans l'espace entre la crépine interne à tôle perforée (4) et la crépine externe à tôle perforée (3),
**caractérisé en ce que**
- la crépine externe à tôle perforée (3) est de forme cylindrique et que le diamètre de la crépine externe à tôle perforée (3) est le même sur toute la longueur de la cartouche du filtre (1),
- la crépine interne à tôle perforée (4) présente une forme conique s'amincissant depuis la plaque de fond (2) vers le raccord d'aspiration (5), le diamètre de la crépine interne à tôle perforée (4) diminuant constamment depuis le plaque de fond (2) vers le raccord d'aspiration (5), et
- que l'épaisseur de la couche de charbon actif (6) diminue depuis le raccord d'aspiration (5) vers la plaque de fond (2) du fait de la forme cylindrique de la crépine externe à tôle perforée (3) et de la forme conique de la crépine interne à tôle perforée (4).

2. Cartouche de filtre selon la revendication 1, **caractérisée par** au moins l'un des deux points suivants :
- la cartouche du filtre est conçue de telle sorte que l'air de l'extérieur soit aspiré vers l'intérieur de la cartouche du filtre après avoir traversé la couche de charbon actif;
- la cartouche du filtre est conçue de telle sorte que l'air soit aspiré de l'intérieur de la cartouche du filtre via le raccord d'aspiration, de l'air de l'extérieur s'écoulant vers l'intérieur de la cartouche de filtre après avoir traversé la couche de charbon actif.

3. Cartouche de filtre selon la revendication 1 ou la revendication 2 **caractérisée en ce que** l'extrémité de la crépine interne à tôle perforée présentant le diamètre le plus petit soit orienté vers le raccord d'aspiration et que l'extrémité de la crépine interne à tôle perforée présentant le diamètre le plus grand soit orientée vers la plaque de fond.

4. Cartouche de filtre selon les revendications 1 à 3 **caractérisée en ce que** la cartouche de filtre présente un débit d'air constant sur toute la couche de charbon actif du fait de la forme conique de la crépine interne à tôle perforée.

5. Cartouche de filtre selon l'une des revendications 1 à 4 **caractérisée par** au moins l'un des points suivants :
- la crépine externe à tôle perforée est fixée à la plaque du fond par plusieurs points de soudure;
- la crépine externe à tôle perforée est fixée au raccord d'aspiration par plusieurs rivets borgnes.

6. Cartouche de filtre selon les revendications 1 à 5 **caractérisée en ce que** la plaque de fond et le raccord d'aspiration sont constitués par des pièces en métal.

7. Cartouche de filtre selon l'une des revendications 1 à 6 **caractérisée par** au moins l'un des points suivants :
- la crépine interne à tôle perforée est montée flottant librement dans la cartouche du filtre;
- la crépine interne à tôle perforée est disposée à l'intérieur de la crépine externe à tôle perforée de façon concentrique par rapport à la crépine externe;
- la crépine interne à tôle perforée est fixée à l'intérieur de la crépine externe à tôle perforée entre le raccord d'aspiration et la plaque de fond;
- la crépine interne à tôle perforée est maintenue dans sa partie inférieure par la plaque de fond et dans sa partie supérieure par le raccord d'aspiration;
- la plaque de fond et le raccord d'aspiration sont conçus de telle sorte que la crépine interne à tôle perforée puisse être fixée entre la plaque de fond et le raccord d'aspiration;
- la plaque de fond présente en son centre un dôme réalisé par emboutissage, le diamètre du dôme embouti correspondant à peu près au diamètre intérieur de l'extrémité inférieure de la crépine interne à tôle perforée, la crépine interne à tôle perforée étant applicable par son extrémité inférieure sur le dôme, et l'extrémité inférieure de la crépine interne à tôle perforée pouvant être fixée par le dôme;
- le raccord d'aspiration présente une moulure circulaire continue, le diamètre de la moulure correspondant à peu près au diamètre intérieur de l'extrémité supérieure de la crépine interne à tôle perforée, l'extrémité supérieure de la crépine interne à tôle perforée pouvant être appliquée sur la moulure circulaire continue, et l'extrémité supérieure de la crépine interne à tôle perforée pouvant être fixée par la moulure circulaire.

8. Cartouche de filtre selon l'une des revendications 1 à 7 **caractérisée par** au moins l'un des points suivants :
- l'épaisseur de la couche de charbon actif au niveau du raccord d'aspiration est d'env. 5 cm;
- l'épaisseur de la couche de charbon actif au niveau de la plaque de fond est d'env. 4 cm;
- la cartouche de filtre présente une longueur d'env. 50 cm;
- la cartouche de filtre présente un diamètre d'env. 23 cm;
- la cartouche de filtre présente une longueur de l'ordre de 30 à 70 cm;
- la cartouche de filtre présente un diamètre de l'ordre de 15 cm à 30 cm;
- le raccord d'aspiration présente un diamètre de l'ordre de 8 cm à 20 cm.

9. Un dispositif filtrant permettant le nettoyage de l'air présentant :
- une cartouche de filtre (1) selon une des revendications 1 à 8;
- une turbine d'aspiration (14) dont l'entrée d'air (13) peut être reliée de façon démontable avec le raccord d'aspiration (5) de la cartouche de filtre (1).

10. Dispositif de filtration selon la revendication 9 **caractérisé en ce que** la turbine d'aspiration est conçue de telle sorte que l'air en provenance de l'intérieur de la cartouche de filtre soit aspiré via le raccord d'aspiration, de l'air de l'extérieur s'écoulant vers l'intérieur de la cartouche de filtre après avoir traversé la couche de charbon actif.

11. Dispositif de filtration selon la revendication 9 ou la revendication 10 **caractérisé en ce que** la cartouche de filtre est du type échangeable.

12. Dispositif de filtration selon l'une des revendications 9 à 11 **caractérisé en ce que** le dispositif de filtration est prévu pour nettoyer l'air dans au moins l'un des cas suivants : une cuisine industrielle, une boucherie, un atelier de peinture, des toilettes, des abris pour animaux, l'industrie de l'alimentation animale.

13. Procédés de montage d'une cartouche de filtre (1) conçue pour le nettoyage de l'air, sur la base
- d'une crépine externe à tôle perforée de forme cylindrique (3),
- d'une plaque de fond (2),
- d'un raccord d'aspiration (5), et
- d'une crépine interne à tôle perforée (4), dont la forme est conique,
**se caractérisant par** les étapes suivantes :
- Mise en place de la crépine externe à tôle perforée (3) sur la plaque de plaque de fond (2),
- Mise en place sur la plaque de plaque de fond (2) de la crépine interne à tôle perforée (4) conique et dont le diamètre va en diminuant vers le haut,
- Mise en place de la couche de charbon actif (6) dans l'espace entre la crépine interne à tôle perforée (4) et la crépine externe à tôle perforée (3);
- Engager le raccord d'aspiration (5) sur l'extrémité supérieure de la crépine interne à tôle perforée (4) et de la crépine externe à tôle perforée (3), la crépine interne à tôle perforée (4) étant fixée entre la plaque de fond (2) et le raccord d'aspiration (5).

14. Procédé selon la revendication 13 **caractérisé par** au moins l'une des autres étapes suivantes :
- Fixation de la crépine externe à tôle perforée à la plaque de fond par plusieurs points de soudure;
- Fixation de la crépine externe à tôle perforée au raccord d'aspiration par plusieurs rivets borgnes.
